# EUROPÄISCHE PATENTANMELDUNG

(11) **EP 2 455 885 A1**
(43) Veröffentlichungstag der Anmeldung: **23.05.2012**
(21) Anmeldenummer: 10014785.9
(22) Anmeldetag: 19.11.2010
(51) Int. Cl.: G06K 7/00, G06K 7/10, H01Q 1/22, H01Q 15/00, H04L 12/40

(54) **System zur Steuerung von busvernetzten Teilnehmern**

(71) Anmelder: Eaton Industries GmbH, 53115 Bonn (DE)
(72) Erfinder: Arndt, Karl-Heinz, 53859 Niederkassel (DE); Thiessmeier, Peter, 53343 Wachtberg (DE)
(74) Vertreter: Leadbetter, Benedict

(57) **Zusammenfassung**

System zur Steuerung von busvernetzten Teilnehmern, wobei eine verarbeitende Einheit 8 eine Schnittstelle zu einem Datenbus 4 zur Steuerung und/oder Abfrage der Teilnehmer lD1 bis lDn aufweist, Konfigurationselement 1 zur Verwendung in einem solchen System zur Steuerung von busvernetzten Teilnehmern, sowie Verfahren zur Steuerung von busvernetzten Teilnehmern durch eine verarbeitende Einheit 8 mit einer Schnittstelle zu einem Datenbus 4, über welchen die Teilnehmer gesteuert und/oder abgefragt werden.

## Beschreibung

Die Erfindung betrifft ein System zur Steuerung von busvernetzten Teilnehmern, wobei eine verarbeitende Einheit eine Schnittstelle zu einem Datenbus zur Steuerung und/oder Abfrage der Teilnehmer aufweist, sowie ein Konfigurationselement zur Verwendung in einem solchen System zur Steuerung von busvernetzten Teilnehmern, sowie ein Verfahren zur Steuerung von busvernetzten Teilnehmern durch eine verarbeitende Einheit mit einer Schnittstelle zu einem Datenbus, über welchen die Teilnehmer gesteuert und/oder abgefragt werden.

Beim Aufbau einer elektrischen Anlage lässt sich der Aufwand für die Verdrahtung und Verschaltung der elektrischen Teilnehmer mit dem Steuerungssystem wesentlich dadurch vereinfachen, dass die Teilnehmer über ein Bussystem datentechnisch vernetzt werden, mit dem Ziel, die angeschlossenen Teilnehmer zu steuern und zu überwachen. Ein solches System zur Steuerung von busvernetzten Geräten ist in der DE 10 2006 030 706 A1 beschrieben.

Elektrische Anlagen können in unterschiedliche Ausbauzuständen betrieben werden, nämlich neben einem Vollausbau, bei dem sämtliche elektrischen Teilnehmer mit dem Busnetz verbunden sind, gegebenenfalls eine Mehrzahl verschiedener Teilkonfigurationen, bei denen nur ein Teil der beim Vollausbau verwendeten Teilnehmer an den Bus angeschlossen ist. Dadurch kann jede Anlage, entsprechend den Anforderungen, so einfach und kostengünstig wie möglich aufgebaut werden. Ein Nachteil besteht darin, dass eine Steuerung für die elektrische Anlage je nach Ausbauzustand auf die Art und Anzahl der elektrischen Teilnehmer an dem Bussystem eingerichtet werden muss. Das bedeutet, dass die jeweils individuelle Steuerung für jede mögliche Ausbaustufe der elektrischen Anlage bei jeder nachträglichen Änderung der Konfiguration, sei es durch Hinzufügen oder durch Weglassen von Teilnehmern, ausgetauscht oder gegebenenfalls angepasst werden muss.

Eine Aufgabe der Erfindung besteht darin, ein System zur Steuerung von busvernetzten Teilnehmern derart zu verbessern, dass damit verschiedene Ausbaustufen einer zu steuernden Anlage ohne Anpassung gesteuert werden können.

Die Aufgabe wird durch die Gegenstände der nebengeordneten Ansprüche gelöst. In den Unteransprüchen sind bevorzugte Ausführungsformen und vorteilhafte Weiterbildungen angegeben.

Das erfindungsgemäße System dient der Steuerung von busvernetzten Teilnehmern, wobei beliebige mit einem Bussystem vernetzbare Geräte als Teilnehmer bezeichnet werden, insbesondere Schalter, Taster, Sensoren, Aktoren oder auch intelligente Einheiten. Das erfindungsgemäße System weist dazu eine verarbeitende Einheit auf, wobei es sich in der Regel um eine im weitesten Sinne intelligente Einheit handelt, wie beispielsweise eine Schaltung, insbesondere eine speicherprogrammierbare Schaltung (SPS) oder einen Computer im allgemeinen. Die verarbeitende Einheit weist eine Schnittstelle zu einem Datenbus auf, welcher mit jedem Teilnehmer verbunden ist und zur Steuerung bzw. Abfrage der Teilnehmer dient. Das erfindungsgemäße System umfasst des Weiteren mindestens ein Konfigurationselement, wobei erfindungsgemäß vorgesehen ist, dass mindestens einer der Teilnehmer durch das Konfigurationselement ersetzbar ist. Das Konfigurationselement ist dazu vorgesehen, eine Kennung über den Datenbus zu senden und die verarbeitende Einheit ist dazu vorgesehen, das Konfigurationselement anhand der Kennung zu erkennen und das Konfigurationselement als Platzhalter des ersetzten Teilnehmers zu konfigurieren.

Die Erfindung bietet den Vorteil, dass einer oder mehrere der Teilnehmer jeweils durch ein Konfigurationselement ersetzt werden können, so dass nunmehr die Konfigurationselemente anstelle der Teilnehmer mit dem Datenbus vernetzt sind. Da die verarbeitende Einheit die Konfigurationselemente anhand der Kennung, die diese senden, erkennt, können die Konfigurationselemente vorteilhaft als Platzhalter konfiguriert werden. Die Konfigurationselemente oder Platzhalter simulieren also den ersetzten Teilnehmer für das System. Zur Erkennung der Konfigurationselemente greift die verarbeitende Einheit vorzugsweise auf eine Konfigurationsbeschreibung zu, in welcher beispielsweise Informationen zu den busvernetzten Teilnehmern und/oder die unverwechselbare Kennung der Konfigurationselemente hinterlegt sind. Das bedeutet, dass die Steuerung und deren Programm unverändert bleiben können, unabhängig davon, wieviele Platzhalter anstelle von Teilnehmern an dem Datenbus angeschlossen sind. Im Falle einer speicherprogrammierbaren Schaltung wäre also beispielsweise keine Änderung der Programmierung notwendig. Somit lässt sich eine elektrische Anlage mit busvernetzten Teilnehmern trotz unterschiedlicher Ausbaustufen vorteilhaft mit einer unveränderten Steuerung betreiben. Die aufwändige Bereitstellung von individuellen Steuerungen für jede Ausbaustufe entfällt. Ebenso wird eine Änderung der Anlage vereinfacht, da die Steuerung nicht ausgetauscht oder angepasst werden muss.

Gemäß einer bevorzugten Ausführungsform des Systems ist vorgesehen, dass die verarbeitende Einheit das Konfigurationselement derart konfiguriert, dass das Konfigurationselement Daten in derselben Länge sendet wie der ersetzte Teilnehmer. Die gesamte Länge der je Bustakt über den Datenbus gesendeten Daten bleibt somit unabhängig von der Anzahl der durch Konfigurationselemente ersetzten Teilnehmer gleich.

Gemäß einer weiteren bevorzugten Ausführungsform des Systems ist das Konfigurationselement dazu vorgesehen, von der verarbeitenden Einheit gesendete Daten zu empfangen, diese jedoch nicht zu verarbeiten. Dadurch besteht vorteilhaft die Möglichkeit, dass die verarbeitende Einheit Daten in Form von Steuerbefehlen und/oder Abfragen an alle im Vollausbau vorgesehenen Teilnehmer sendet, unabhängig davon, welche dieser Teilnehmer tatsächlich mit dem Datenbus verbunden sind und welche durch Konfigurationselemente als Platzhalter ersetzt sind.

Gemäß einer weiteren bevorzugten Ausführungsform des Systems ist die verarbeitende Einheit dazu vorgesehen, von dem Konfigurationselement erhaltene Daten nicht zu verarbeiten. Die als Platzhalter eingesetzten Konfigurationselemente senden Daten an die verarbeitende Einheit, um die Gesamtmenge der über den Datenbus gesendeten Daten konstant zu halten, wobei die verarbeitende Einheit die von Konfigurationselementen gesendeten Daten an der unverwechselbaren Kennung der Konfigurationselemente erkennt und die Verarbeitung dieser irrelevanten Daten unterlässt.

Die verarbeitende Einheit muss nicht notwendigerweise ein ausschließlich zur Steuerung der busvernetzten Teilnehmer vorgesehenes Gerät mit einer unmittelbaren Schnittstelle zu dem Datenbus sein. Gemäß einer weiteren bevorzugten Ausführungsform des Systems ist vorgesehen, dass die verarbeitende Einheit eine Steuerung und ein Gateway aufweist, wobei das Gateway die Schnittstelle zu dem Datenbus aufweist. Das Gateway ist dabei über einen weiteren Bus mit der Steuerung verbunden. Die Steuerung kann im übrigen über diesen weiteren Bus noch mit weiteren Gateways oder direkt mit externen Teilnehmern außerhalb des erfindungsgemäßen Systems verbunden sein. Bei dieser Ausführungsform ist es besonders bevorzugt, dass das Gateway von dem Konfigurationselement erhaltene Daten anhand der Kennung erkennt und daraufhin die Steuerung anweist, diese Daten nicht zu verarbeiten. Da die Konfigurationselemente als Platzhalter ihre Kennung über den Datenbus senden, muss das Erkennen dieser Kennung bereits durch das Gateway erfolgen, da diese Kennung nur unter den Teilnehmern des Datenbusses eindeutig ein Konfigurationselement angibt. Dies gilt jedoch nicht notwendigerweise in dem weiteren, durch die Steuerung kontrollierten Bussystem.

Ein weiterer Gegenstand der Erfindung betrifft ein Konfigurationselement zur

Verwendung in einem System zur Steuerung von busvernetzten Teilnehmern, wie hier zuvor beschrieben, wobei das Konfigurationselement eine anwendungsspezifische Schaltung und einen Anschluss an den Datenbus aufweist. Die Schaltung ist bevorzugt dazu vorgesehen, dass durch das mit dem Datenbus verbundene Konfigurationselement eine Kennung über den Datenbus gesendet wird. Weiterhin bevorzugt ist die Schaltung dazu vorgesehen, durch die verarbeitende Einheit als Platzhalter für einen bestimmten Teilnehmer konfiguriert zu werden. Die Konfiguration der Schaltung ist insbesondere dahingehend durch die verarbeitende Einheit vorgebbar, dass das Konfigurationselement Daten in einer vorgegebenen Länge sendet. Insbesondere entspricht die vorgegebene Länge der Länge derjenigen Daten, welche durch den ersetzten Teilnehmer gesendet wird, wenn dieser mit dem Datenbus verbunden ist.

Ein weiterer Gegenstand der Erfindung betrifft ein Verfahren zur Steuerung von busvernetzten Teilnehmern durch eine verarbeitende Einheit mit einer Schnittstelle zu einem Datenbus, über welchen die Teilnehmer gesteuert und/oder abgefragt werden. Erfindungsgemäß ist vorgesehen, dass mindestens einer der Teilnehmer durch ein Konfigurationselement ersetzt wird, wobei durch das Konfigurationselement eine Kennung über den Datenbus gesendet wird und wobei das Konfigurationselement anhand der Kennung durch die verarbeitende Einheit erkannt wird und daraufhin als Platzhalter des ersetzten Teilnehmers konfiguriert wird. Gemäß einer bevorzugten Ausführungsform wird das Konfigurationselement derart konfiguriert, dass durch das Konfigurationselement Daten in derselben Länge gesendet werden, wie durch den ersetzten Teilnehmer. Weiterhin bevorzugt werden von der verarbeitenden Einheit erhaltene Daten durch eine anwendungsspezifische Schaltung des Konfigurationselements nicht verarbeitet. Gemäß einer weiteren bevorzugten Ausführungsform ist vorgesehen, dass die Daten von dem mindestens einen Konfigurationselement durch die verarbeitende Einheit nicht verarbeitet werden.

Gemäß einer weiteren bevorzugten Ausführungsform ist vorgesehen, dass eine Steuerung und ein Gateway über einen weiteren Bus verbunden werden, um als verarbeitende Einheit zu dienen, wobei die Schnittstelle zu dem Datenbus an dem Gateway gebildet wird. Von dem Konfigurationselement erhaltene Daten werden anhand der Kennung von dem Gateway erkannt, worauf die Steuerung angewiesen wird, diese Daten nicht zu verarbeiten.

Nachfolgend wird die Erfindung anhand von Ausführungsbeispielen in Zeichnungen näher erläutert. Die Ausführungen dienen zur Erläuterung des erfindungsgemäßen Systems mit einem oder mehreren erfindungsgemäßen Konfigurationselementen, sowie des erfindungsgemäßen Verfahrens, gleichermaßen. Die Ausführungen sind beispielhaft und schränken den allgemeinen Erfindungsgedanken nicht ein.

Es zeigen
- Figur 1: eine erste Ausführungsform des erfindungsgemäßen Systems zur Steuerung von busvernetzten Teilnehmern in einer schematischen Darstellung;
- Figur 2: eine zweite Ausführungsform des erfindungsgemäßen Systems zur Steuerung von busvernetzten Teilnehmern in einer schematischen Darstellung;
- Figur 3: eine schematische Darstellung von Daten, welche von Teilnehmern und erfindungsgemäßen Konfigurationselementen des Systems gemäß Figur 2 gesendet werden;
- Figur 4: ein Ausführungsbeispiel eines erfindungsgemäßen Konfigurationselements.

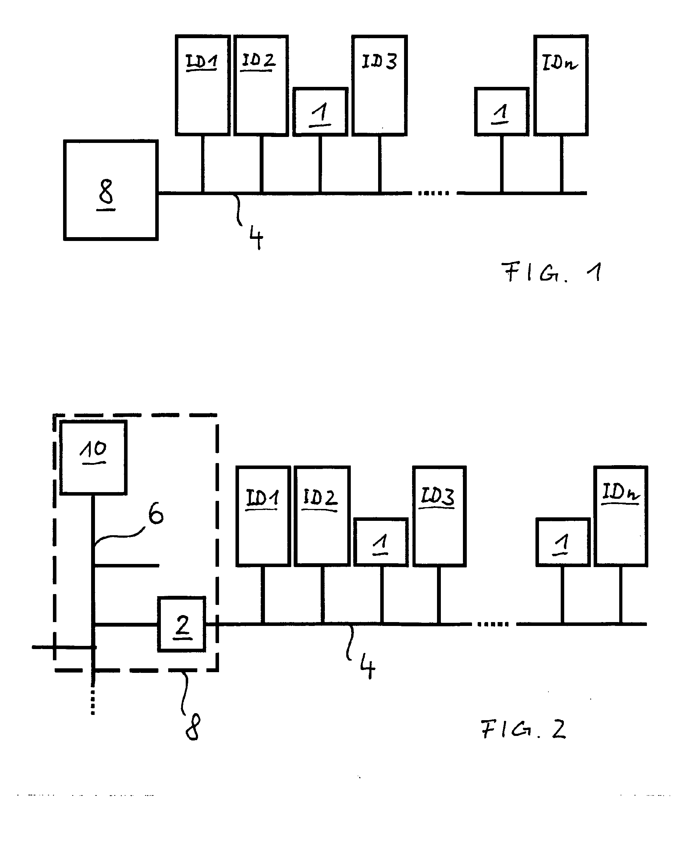

Die Figur 1 zeigt eine schematische Darstellung einer ersten Ausführungsform eines erfindungsgemäßen Systems zur Steuerung von busvernetzten Teilnehmern, die mit den Bezugszeichen lD1, lD2 bis lDn bezeichnet sind, wodurch eine unbestimmte Anzahl von n Teilnehmern dargestellt werden soll. Die Teilnehmer sind über einen Datenbus 4 mit einer verarbeitenden Einheit 8 verbunden. Mindestens einer der Teilnehmer ist durch ein Konfigurationselement 1 ersetzt, welches ebenso mit dem Datenbus 4 verbunden ist. Erfindungsgemäß sendet das Konfigurationselement 1 eine Kennung über den Datenbus 4 und wird anhand seiner Kennung von der verarbeitenden Einheit 8 als Konfigurationselement erkannt und entsprechend als Platzhalter für den ersetzten Teilnehmer konfiguriert. Das Konfigurationselement 1 wird derart konfiguriert, dass es Daten in derselben Länge sendet, wie der Teilnehmer, den das Konfigurationselement 1 ersetzt. Die von dem Konfigurationselement 1 gesendeten Daten dienen dazu, die Gesamtlänge der je Bustakt gesendeten Daten unabhängig von der Anzahl der durch Konfigurationselemente als Platzhalter ersetzten Teilnehmer konstant zu halten. Die vom Konfigurationselement 1 gesendeten Daten werden durch die verarbeitende Einheit nicht verarbeitet. Es ist insofern beliebig, welche Daten durch das Konfigurationselement gesendet werden. Es besteht jedoch die Möglichkeit, dass das Konfigurationselement beispielsweise ausschließlich Nullwerte als Daten sendet.

ln der Figur 2 ist eine zweite Ausführungsform des erfindungsgemäßen Systems zur Steuerung von busvernetzten Teilnehmern lD1 bis lDn schematisch dargestellt. Bei der verarbeitenden Einheit 8 kann es sich um eine unmittelbar mit dem Datenbus 4 verbundene Bussteuerung handeln, vgl. Figur 1. ln dem Ausführungsbeispiel gemäß Figur 2 besteht die verarbeitende Einheit 8 aus einer Steuerung 10, welche über einen weiteren Bus 6 mit einem Gateway 2 verbunden ist, wobei das Gateway 2 die Schnittstelle zu dem Datenbus 4 aufweist. An dem weiteren Bus 6 können wiederum Teilnehmer angeschlossen sein, die unabhängig von dem erfindungsgemäßen System sind. Ein wesentlicher Unterschied dieser Ausführungsform besteht darin, dass die Steuerung 10 die Konfigurationselemente 1, die mit dem Datenbus 4 verbunden sind, nicht als solche erkennen kann, da die Kennung der Konfigurationselemente 1 lediglich für den Datenbus 4, nicht aber für den weiteren Bus 6 eine unverwechselbare Kennung für ein Konfigurationselement darstellt. Aus diesem Grund ist das Gateway 2 dazu vorgesehen, die Kennung der Konfigurationselemente 1 zu erkennen und daraufhin die Information an die Steuerung 10 zu liefern, welche Teilnehmer durch Konfigurationselemente 1 ersetzt sind, so dass diese entsprechend konfiguriert werden können.

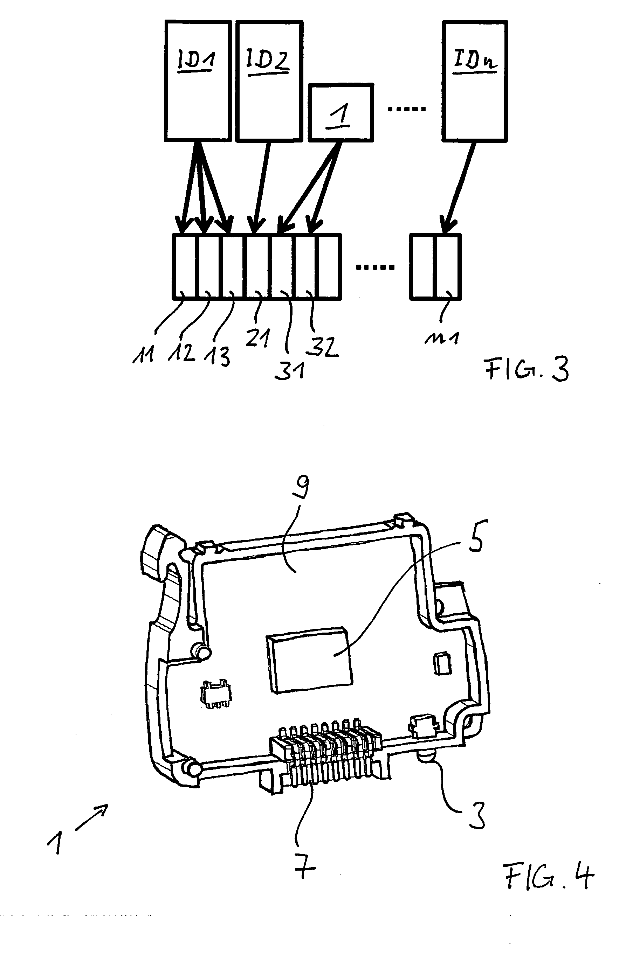

ln der Figur 3 sind schematisch die Daten dargestellt, welche je Bustakt von den Teilnehmern lD1 bis lDn geliefert wird, wobei mindestens einer der Teilnehmer durch ein Konfigurationselement ersetzt ist. Der Teilnehmer lD1 sendet beispielsweise je Bustakt drei Datenbytes 11, 12, 13, der Teilnehmer lD2 nur ein Datenbyte 21. Der ersetzte Teilnehmer würde zwei Datenbytes 31, 32 senden, welche stattdessen durch das Konfigurationselement 1, beispielsweise als in Form von zwei Datenbytes 31, 32 mit Nullwerten gesendet werden. Die Gesamtlänge der Daten von dem ersten Byte 11 bis zu dem letzten Byte n1 des n-ten Teilnehmers lDn bleibt dadurch unabhängig von der Anzahl der durch Konfigurationselemente 1 ersetzten Teilnehmer gleich, wodurch die Verarbeitung durch eine einheitliche Steuerung wesentlich vereinfacht wird.

In der Figur 4 ist ein Ausführungsbeispiel für ein erfindungsgemäßes Konfigurationselement 1 dargestellt, welches über eine anwendungsspezifische Schaltung 5 verfügt, welche über einen Anschluss 7 mit dem Datenbus 4 (vgl. Figuren 1 und 2) verbindbar ist. In einem Gehäuse 9 befindet sich ansonsten noch eine Kontrollleuchte 3, welche beispielsweise zur Funktionskontrolle des Konfigurationselements 1 dient.

### Bezugszeichenliste

- 1: Konfigurationselement
- 2: Gateway
- 3: Kontrollleuchte
- 4: Datenbus
- 5: Schaltung
- 6: Weiterer Datenbus
- 7: Anschluss
- 8: Verarbeitende Einheit
- 9: Gehäuse
- 10: Steuerung
- lD1 bis lDn: Teilnehmer
- 11, 12, 13, 21: Datenbytes
- 31, 32, n1: Datenbytes

## Patentansprüche

1. System zur Steuerung von busvernetzten Teilnehmern,
wobei eine verarbeitende Einheit (8) eine Schnittstelle zu einem Datenbus (4) zur Steuerung und/oder Abfrage der Teilnehmer (lD1 ... lDn) aufweist, **dadurch gekennzeichnet,**
**dass** mindestens einer der Teilnehmer durch ein Konfigurationselement (1) ersetzbar ist, wobei das Konfigurationselement dazu vorgesehen ist, eine Kennung über den Datenbus (4) zu senden und wobei die verarbeitende Einheit (8) dazu vorgesehen ist, das Konfigurationselement (1) anhand der Kennung zu erkennen und das Konfigurationselement als Platzhalter des ersetzten Teilnehmers zu konfigurieren.

2. System nach Anspruch 1,
**dadurch gekennzeichnet,**
**dass** die verarbeitende Einheit (8) das Konfigurationselement (1) derart konfiguriert, dass das Konfigurationselement Daten in derselben Länge sendet, wie der ersetzte Teilnehmer.

3. System nach einem der vorhergehenden Ansprüche,
**dadurch gekennzeichnet,**
**dass** das Konfigurationselement (1) dazu vorgesehen ist, von der verarbeitenden Einheit (8) an den ersetzten Teilnehmer gesendete Daten zu empfangen, diese jedoch nicht zu verarbeiten.

4. System nach einem der vorhergehenden Ansprüche,
**dadurch gekennzeichnet,**
**dass** die verarbeitende Einheit (8) dazu vorgesehen ist, von dem Konfigurationselement (1) erhaltene Daten nicht zu verarbeiten.

5. System nach einem der vorhergehenden Ansprüche,
**dadurch gekennzeichnet,**
**dass** die verarbeitende Einheit (8) eine Steuerung (10) und ein Gateway (2) aufweist, wobei das Gateway (2) die Schnittstelle zu dem Datenbus (4) aufweist und über einen weiteren Bus (6) mit der Steuerung verbunden ist.

6. System nach Anspruch 5,
**dadurch gekennzeichnet,**
**dass** das Gateway (2) von dem Konfigurationselement (1) erhaltene Daten anhand der Kennung erkennt und die Steuerung (10) anweist, diese Daten nicht zu verarbeiten.

7. Konfigurationselement (1) zur Verwendung in einem System zur Steuerung von busvernetzten Teilnehmern gemäß einem der vorhergehenden Ansprüche,
**dadurch gekennzeichnet,**
**dass** das Konfigurationselement eine anwendungsspezifische Schaltung (5) und einen Anschluss (7) an den Datenbus (4) aufweist.

8. Konfigurationselement nach Anspruch 7,
**dadurch gekennzeichnet,**
**dass** die Schaltung (5) dazu vorgesehen ist, dass durch das mit dem Datenbus (4) verbundene Konfigurationselement (1) eine Kennung über den Datenbus gesendet wird.

9. Konfigurationselement nach einem der Ansprüche 7 oder 8,
**dadurch gekennzeichnet,**
**dass** die Schaltung (5) dazu vorgesehen ist, dass durch die verarbeitende Einheit (8) eine Konfiguration dahingehend vorgebbar ist, dass das Konfigurationselement (1) Daten in einer vorgegebenen Länge sendet.

10. Konfigurationselement nach Anspruch 9,
**dadurch gekennzeichnet,**
**dass** die vorgegebene Länge der Länge derjenigen Daten entspricht, welche durch den ersetzten Teilnehmer gesendet wird, wenn dieser mit dem Datenbus verbunden ist.

11. Verfahren zur Steuerung von busvernetzten Teilnehmern durch eine verarbeitende Einheit mit einer Schnittstelle zu einem Datenbus, über welchen die Teilnehmer (lD 1 ... lD n) gesteuert und/oder abgefragt werden,
**dadurch gekennzeichnet,**
**dass** mindestens einer der Teilnehmer durch ein Konfigurationselement ersetzt wird, wobei durch das Konfigurationselement eine Kennung über den Datenbus gesendet wird und wobei das Konfigurationselement anhand der Kennung durch die verarbeitende Einheit erkannt wird und daraufhin als Platzhalter des ersetzten Teilnehmers konfiguriert wird.

12. Verfahren nach Anspruch 11,
**dadurch gekennzeichnet,**
**dass** das Konfigurationselement derart konfiguriert wird, dass durch das Konfigurationselement Daten in derselben Länge gesendet werden, wie durch den ersetzten Teilnehmer.

13. Verfahren nach einem der Ansprüche 11 oder 12,
**dadurch gekennzeichnet,**
**dass** von der verarbeitenden Einheit erhaltene Daten durch eine anwendungsspezifische Schaltung (5) des Konfigurationselements nicht verarbeitet werden.

14. Verfahren nach einem der Ansprüche 11 bis 13,
**dadurch gekennzeichnet,**
**dass** die Daten von dem mindestens einen Konfigurationselement durch die verarbeitende Einheit nicht verarbeitet werden.

15. Verfahren nach einem der Ansprüche 11 bis 14,
**dadurch gekennzeichnet,**
**dass** als verarbeitende Einheit (8) eine Steuerung (10) und ein Gateway (2) über einen weiteren Bus (6) verbunden werden, wobei die Schnittstelle zu dem Datenbus (4) an dem das Gateway (2) gebildet wird, wobei von dem Konfigurationselement (1) erhaltene Daten anhand der Kennung von dem Gateway (2) erkannt werden und die Steuerung angewiesen wird, diese Daten nicht zu verarbeiten.
